**Europäisches Patentamt**

**European Patent Office**

**Office européen des brevets**

(19)

(11) Veröffentlichungsnummer : **0 325 988 B1**

(12)

# EUROPÄISCHE PATENTSCHRIFT

(45) Veröffentlichungstag der Patentschrift :
**18.03.92 Patentblatt 92/12**

(51) Int. Cl.$^5$ : **C09C 1/36**

(21) Anmeldenummer : **89100686.8**

(22) Anmeldetag : **17.01.89**

(54) Verfahren zur Herstellung von Rutilmischphasenpigmenten.

(30) Priorität : **28.01.88 DE 3802469**

(43) Veröffentlichungstag der Anmeldung :
**02.08.89 Patentblatt 89/31**

(45) Bekanntmachung des Hinweises auf die
Patenterteilung :
**18.03.92 Patentblatt 92/12**

(84) Benannte Vertragsstaaten :
**DE ES GB IT NL**

(56) Entgegenhaltungen :
**DE-A- 3 019 172**

(73) Patentinhaber : **BAYER AG**
**W-5090 Leverkusen 1 Bayerwerk (DE)**

(72) Erfinder : **Rademachers, Jakob, Dr.**
**Hoeninghausstrasse 34**
**W-4150 Krefeld 12 (DE)**
Erfinder : **Volker, Wilhelm, Dr.**
**Fichtenweg 1**
**W-5060 Bergisch Gladbach 2 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 325 988 B1

Jouve, 18, rue Saint-Denis, 75001 PARIS

## Beschreibung

Die vorliegende Erfindung betrifft ein Verfahren zur Herstellung von Rutilmischphasenpigmenten durch Glühen von Mischungen aus Titandioxid oder Titanoxidhydroxid mit farbgebenden Verbindungen von Metallen, gegebenenfalls unter Zusatz von Verbindungen des Antimons, Niobs oder Wolframs, im dirket beheizten kontinuierlich betriebenen Drehrohrofen.

Rutilmischphasenpigmente sind aus der US-A-3 022 186 bekannt.

Unter Rutilmischphasenpigmenten versteht man Buntpigmente, die durch Einbau farbiger Übergangselemente in das Kristallgitter des Rutils erhalten werden. Vornehmlich werden solche Metalle als Gastkomponente in das Wirtsgitter des Rutils eingebaut, deren Kationen-Radien in der Größenordnung des Titan-IV-ion-Radius liegen. Weicht die Wertigkeit des einzubauenden Kations von der des Titanions, nämlich vier ab, so wird zum statistischen Valenzausgleich ein weiteres Kation mit anderer Wertigkeit zugesetzt.

Größere Bedeutung haben in der technischen Herstellung die Nickel- und Chrom-Rutil-Mischphasenpigmente erlangt. Hierbei werden zum Wertigkeitsausgleich zu den farbgebenden Nickel- und Chromoxiden höherwertige Oxide, insbesondere Antimon - seltener Niob- oder Wolframoxid - eingebaut (Ullmanns Encyklopädie der technischen Chemie, Verlag Chemie GmbH, Weinheim 1979, 4. Aufl., Bd. 18, S. 608).

Die Bildung der Mischphasenpigmente mit Rutilgitter wird durch Glühen von homogenen Mischungen aus Titandioxid als Wirtskomponente und den farbgebenden Gastkomponenten bei Temperaturen bis zu 1200° C bewirkt. Dabei können auch an Stelle oxidischer Gastkomponenten hitzeunbeständige Verbindungen der den Komponenten zugrunde liegenden Metalle mit Titandioxid, Titanhydroxid oder Titanoxidhydroxid gemischt werden, die bei Erhitzen an der Luft in die entsprechenden Oxide übergehen, z.B. Hydrate, Hydroxide, Oxidhydroxide, Carbonate, Acetate, Nitrate oder Formiate.

Das Glühen der Rohstoffmischungen erfolgt gewöhnlich in Drehrohröfen, wobei direkt oder indirekt beheizte Drehrohröfen eingesetzt werden. Bei direkt befeuerten Drehrohröfen geht man zweckmäßig von wäßrigen, die Ausgangskomponenten enthaltenen Suspensionen aus, wodurch ein Austrag von Feststoffen mit den Rauchgasen aus dem Ofen weitgehend vermieden wird. Bei Einsatz von trockenen Mischungen der Ausgangskomponenten eignen sich eher indirekt beheizte Öfen, wie es etwa aus DE-A-3 019 172 bekannt ist, da hierbei die Abgasmenge je nach den Ausgangsmaterialien ganz bzw. erheblich reduziert werden kann, so daß ein erhöhter Feststoffaustrag nicht zu befürchten ist.

Voraussetzung für das Erhalten einer guten Pigmentqualität ist insbesondere eine vollständige Rutilisierung.

Diese Bedingungen werden bei den bisher ausgeübten Verfahren dann erfüllt, wenn lange Verweilzeiten über den gesamten Drehrohrofenprozeß eingehalten werden, die zu einer geringen Raumzeitausbeute und damit zu hohen Kosten des Verfahrens führen.

Aufgabe der vorliegenden Erfindung ist es somit, ein Verfahren zur Herstellung von Rutilmischphasenpigmenten zur Verfügung zu stellen, welches die beschriebenen Nachteile nicht aufweist.

Es wurde nun gefunden, daß diese Forderungen erfüllt werden durch ein Verfahren zur Herstellung von Rutilmischphasenpigmenten durch Glühen von Mischungen aus Titandioxid oder Titanoxidhydroxid mit farbgebenden Verbindungen von Metallen, gegebenenfalls unter Zusatz von Verbindungen des Antimons, Niobs oder Wolframs, im direkt beheizten kontinuierlich betriebenen Drehrohrofen, welches dadurch gekennzeichnet ist, daß der Ofenatmosphäre in der zweiten Hälfte des Drehrohres vom Materialfluß aus gesehen Luft im Gegenstrom zur Fließrichtung der Feststoffe zugeführt wird.

Dieses Verfahren ist Gegenstand der vorliegenden Erfindung.

In einer bevorzugten Ausführungsform wird die Luft bei Ofentemperaturen von 700 bis 900° C zugeführt. Die Luft selbst weist vorzugsweise Raumtemperatur auf. Die Luft kann dabei auch über einen längeren Ofenabschnitt in mehreren Teilmengen aufgegeben werden. Durch die erfindungsgemäße Luftzuführung wird erreicht, daß die Gesamtverweilzeit im Drehrohr erbeblich verringert wird, was eine deutliche Steigerung der Ofenkapazität bedeutet.

Andererseits ist es auch möglich, bei geringerer Kapazitätssteigerung in einer verlängerten Trocknungszone mit dünneren Feststoffsuspensionen bei der Aufgabemischung zu arbeiten.

Die erfindungsgemäß zugegebene Luftmenge beträgt, um effektiv zu sein, 10 bis 100 Vol.-%, vorzugsweise 30 bis 60 Vol.-%, der Brennerrauchgase. Anstatt die Luft in die zweite Ofenhälfte zu leiten, ist es natürlich auch möglich, dies in den zweiten von zwei entsprechend hintereinander geschalteten Öfen zu tun.

Das Aufgabegut wird wie üblich in Form einer wäßrigen Suspension zugegeben, die als Hauptbestandteil Titan-Sauerstoffverbindungen in Form von Anatas oder Titanoxidhydroxid enthalten.

Dient der Zusatz von Antimonoxid als Valenzausgleich, wird häufig dreiwertiges Antimon verwendet, das während der Kalzinierung im Drehrohrofen auf die höherwertige Oxidationsstufe gebracht wird.

Üblicherweise werden hochfeststoffhaltige Pasten auf den Ofen gegeben, die entweder durch Eindicken oder Filtrieren Feststoffgehalte bis zu etwa 50 Gew.-% aufweisen. Es hat sich herausgestellt, daß durch Verdünnen der Pasten mit Wasser auf Feststoffgehalte zwischen 25 und 35 Gew.-% hellere und gesättigtere Mischphasenpigmente erhalten werden.

Eine besonders bevorzugte Ausführungsform des erfindungsgemäßen Verfahrens besteht somit darin, daß die Konzentration der zugeführten Suspension zwischen 25 und 50 Gew.-%, vorzugsweise zwischen 30 und 35 %, bezogen auf trockenen Feststoffgehalt, beträgt.

Die Zuführung der Luft zur Ofenatmosphäre kann durch lanzenartige Zuführungsleitungen von der Stirnseite am Materialaustragsende des Ofens erfolgen. Sie kann aber auch durch den Drehrohrmantel bei eingestelltem Unterdruck eingezogen werden. Zweckmäßigerweise wird die Luft über Ventilatoren, die an der Außenwand des Drehrohres befestigt und mit elektrischen Zuleitungen über Schleifkontakte verbunden sind, in die Ofenatmosphäre geführt.

Die Erfindung wird im folgenden beispielhaft erläutert, ohne daß hierin eine Einschränkung zu sehen ist.

Beispiel 1

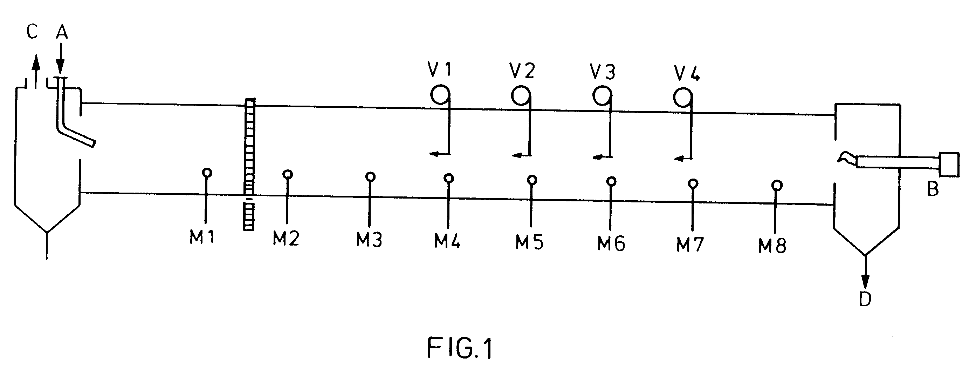

Einem ausgemauerten Drehrohrofen mit 12 m Länge und einem Durchmesser von 80 cm, wie er in Fig. 1 dargestellt ist, werden stündlich 150 kg einer Suspension bei A zugeführt, die folgenderweise erhalten wurde: 2.666 kg Titanoxidhydroxid-Suspension aus der Hydrolyse der Titandioxidpigment-Fabrikation mit 27 % $TiO_2$-Gehalt werden mit 35 kg Chromoxid und 73 kg Antimon III-oxid versetzt, innig gerührt und auf eine Paste mit 40 Gew.-% Trockenfeststoff eingedickt. Im Gegenstrom wird Heißgas durch Verbrennen von 30 m³ Erdgas mit 360 m³ Luft stündlich bei B in den Ofen geleitet. Über die Ventilatoren V 1 bis V 4 fließt stündlich 165 m³ Luft mit Raumtemperatur in das Drehrohr. Mit Hilfe eines Abgasventilators wird bei C ein Unterdruck von 0,2 mbar unter Atmosphärendruck eingestellt. Die Temperaturverteilung über die Länge des Ofens wird anhand der Meßstellen M 1 bis M 8 registriert. Bei M 1 werden Temperaturen von 300°C gemessen, die dann langsam bis M 6 auf 900°C steigen. Im Bereich von M 2 bis M 4 ist ein steiler Anstieg der Temperaturen von 600 bis 850° C zu verzeichnen. Zwischen den Meßstellen M 7 und M 8 stellen sich Temperaturen über 1.000° C bis 1.100° C ein. Im Bereich der Zone M 1 bis M 3 wurde ein Sauerstoffgehalt von 16 Vol.-% gemessen.

Der bei D anfallende Klinker von stündlich 50 bis 55 kg ergab nach Kühlen und Mahlen ein helles, farbreines Gelbpigment.

Beispiel 2 (Vergleichsbeispiel)

Bei derselben Verfahrensweise wie in Beispiel 1 wurden die Ventilatoren V 1 bis V 4 abgestellt. Hierbei zeigte die Meßstelle M 1 bereits 400° C an und 1.000° C wurden bereits zwischen M 6 und M 7 erreicht. In der Nähe der Meßstelle M 1 wurde ein Sauerstoffgehalt von 13 Vol.-% gemessen. Das erhaltene Farbpigment war schmutzig und grünstichig. Erst bei Rücknahme der Aufgabemenge von stündlich 150 auf 110 kg Paste, entspr. 37-40 kg/h Klinker, konnte ein farbreines Gelbpigment erhalten werden.

Beispiel 3

Eine Rohstoffmischung, wie sie in Beispiel 1 beschrieben ist, enthielt 32 Gew-% Feststoff. Sie wurde nicht eingedickt. Der Unterdruck wurde auf 0,05 mbar unter Atmosphärendruck herabgesetzt. Die Aufgabemenge betrug 170 kg Suspension pro Stunde. Die übrigen Bedingungen blieben unverändert. Bei ähnlichem Temperaturverlauf wie in Beispiel 1 wurde ein Klinker (45-50 kg/h) erhalten, der nach dem Abkühlen und Mahlen ein Gelbpigment ergab, das heller und gesättigter als das Pigment aus Beispiel 1 war.

Beispiel 4 (Vergleichsbeispiel)

Bei gleichen Bedingungen wie in Beispiel 3 wurden die Ventilatoren abgestellt. Im Drehrohr stellte sich ein Temperaturprofil ein, das mit dem aus Beispiel 2 vergleichbar war. Das erhaltene Pigment war dunkler und schmutziger als das Pigment aus Beispiel 1.

**Patentansprüche**

1. Verfahren zur Herstellung von Rutilmischphasenpigmenten durch Glühen von Mischungen aus Titandioxid oder Titanoxidhydroxid mit farbgebenden Verbindungen von Metallen, gegebenenfalls unter Zusatz von Verbindungen des Antimons, Niobs oder Wolframs, im direkt beheizten kontinuierlich betriebenen Drehrohrofen, dadurch gekennzeichnt, daß der Ofenatmosphäre in der zweiten Hälfte des Drehrohres vom Materialfluß aus gesehen Luft im Gegenstrom zur Fließrichtung der Feststoffe zugeführt wird.

2. Verfahren gemäß Anspruch 1, dadurch gekennzeichnet, daß die Luft bei Ofentemperaturen von 700 bis 900°C zugeführt wird.

3. Verfahren gemäß einem der Ansprüche 1 und 2, dadurch gekennzeichnet, daß Luft mit Raumtemperatur zugeführt wird.

4. Verfahren gemäß einem oder mehrerer der Ansprüche 1 bis 3, dadurch gekennzeichnet, daß die zugeführte Luftmenge 10 bis 100 Vol.-%, vorzugsweise 30 bis 60 Vol-% der Brennerrauchgase, beträgt.

5. Verfahren gemäß einem oder mehrerer der Ansprüche 1 bis 4, dadurch gekennzeichnet, daß die zugeführte Luft in einen zweiten von zwei entsprechend hintereinander geschalteten Öfen geleitet wird.

6. Verfahren gemäß einem oder mehrerer der Ansprüche 1 bis 5, dadurch gekennzeichnet, daß die zugeführte Feststoffmischung in Form einer wässerigen Suspension dem Ofen zugeführt wird.

7. Verfahren gemäß Anspruch 6, dadurch gekennzeichnet, daß die Konzentration der zugeführten Suspension zwischen 25 und 50 Gew.-%, vorzugsweise zwischen 30 und 35 Gew.-%, bezogen auf trockenen Feststoffgehalt, beträgt.


## Claims

1. A process for the production of rutile mixed-phase pigments by calcination of mixtures of titanium dioxide or titanium oxide hydroxide with dye-producing compounds of metals, optionally with addition of compounds of antimony, niobium or tungsten, in a directly heated, continuously operated rotary kiln, characterized in that, in terms of material flow, air is introduced into the kiln atmosphere in counter-current to the direction of flow of the solids in the second half of the rotary kiln.

2. A process as claimed in claim 1, characterized in that the air is introduced at kiln temperatures of 700 to 900°C.

3. A process as claimed in claim 1 or 2, characterized in that the air is introduced at room temperature.

4. A process as claimed in one or more of claims 1 to 3, characterized in that the quantity of air introduced amounts to between 10 and 100% by volume and preferably to between 30 and 60% by volume of the kiln smoke cases.

5. A process as claimed in one or more of claims 1 to 4, characterized in that the air introduced is fed into the second of two kilns arranged correspondingly one behind the other.

6. A process as claimed in one or more of claims 1 to 5, characterized in that the solid mixture introduced is fed to the kiln in the form of an aqueous suspension.

7. A process as claimed in claim 6, characterized in that the concentration of the suspension introduced is between 25 and 50% by weight and preferably between 30 and 35% by weight, based on the dry solids content.


## Revendications

1. Procédé de fabrication de pigments à phases mixtes de rutile par calcination de mélanges de bioxyde de titane ou d'hydroxyde de titane et de composés chromophores de métaux, éventuellement avec addition de composés de l'antimoine, du niobium ou du tungstène, dans un four tubulaire rotatif fonctionnant en continu et à chauffage direct, caractérisé en ce que de l'air est ajouté à l'atmosphère du four dans la seconde moitié du four rotatif, dans le sens du flux de matière, à contre-courant du sens de progression des matières solides.

2. Procédé selon la revendication 1, caractérisé en ce que l'air est introduit à des températures du four de 700 à 900°C.

3. Procédé selon l'une des revendications 1 et 2, caractérisé en ce que l'on introduit de l'air à la température ambiante.

4. Procédé selon une ou plusieurs des revendications 1 à 3, caractérisé en ce que la quantité d'air introduite représente 10 à 100 % en volume, de préférence 30 à 60 % en volume des gaz de fumée des brûleurs.

5. Procédé selon une ou plusieurs des revendications 1 à 4, caractérisé en ce que l'air introduit est conduit dans le second four parmi deux fours branchés l'un derrière l'autre.

6. Procédé selon une ou plusieurs des revendications 1 à 5, caractérisé en ce que le mélange de matières solides est introduit dans le four sous forme d'une suspension aqueuse.

7. Procédé selon la revendication 6, caractérisé en ce que la concentration de la suspension introduite est de 25 à 50 % en poids, de préférence de 30 à 35 % en poids, par rapport à la teneur sèche en matières solides.

FIG.1